# EUROPÄISCHE PATENTSCHRIFT

(11) **EP 2 740 957 B1**
(45) Veröffentlichungstag und Bekanntmachung des Hinweises auf die Patenterteilung: **16.03.2016**
(21) Anmeldenummer: 13192039.9
(22) Anmeldetag: 08.11.2013
(51) Int. Cl.: F16C 33/66, F16C 29/06

(54) **Führungswagen**
Guide carriage
Chariot de guidage

(30) Priorität: 06.12.2012 DE 102012222397
(43) Veröffentlichungstag der Anmeldung: 11.06.2014
(73) Patentinhaber: ROBERT BOSCH GMBH, 70442 Stuttgart (DE)
(72) Erfinder: Dittmar, Michael, 97421 Schweinfurt (DE); Schott, Andre, 97456 Dittelbrunn (DE); Schupies, Andreas, 97469 Gochsheim (DE)
(74) Vertreter: Maiß, Harald

(56) Entgegenhaltungen:
- EP-B1- 2 094 984
- DE-A1- 10 332 922
- DE-A1-102007 013 945
- DE-A1-102007 056 862
- DE-C1- 4 395 740
- US-A- 5 584 581

## Beschreibung

Die Erfindung betrifft einen Führungswagen für ein Linearrollenlager gemäß dem Oberbegriff des Patentanspruchs 1.

Führungswagen für Linearrollenlager ermöglichen unter hohen Lasten eine präzise geführte lineare Bewegung. Dazu verfährt der Führungswagen, an dem die Last angreift, entlang einer geraden Führungsschiene. Zur Reduzierung der Reibung bei gleichzeitig hohen übertragbaren Lasten laufen zwischen dem Führungswagen und der Führungsschiene meistens vier geschlossene bzw. endlose Reihen von Rollen in entsprechenden Rollenbahnen um. Die Führungsschiene wird von Führungswagen umgriffen, so dass eine Abstützung von Lasten in alle Richtungen möglich ist, die quer zur Verfahrrichtung gerichtet sind.

Bei dem in der Druckschrift DE10 2007 056 862 A1 gezeigten Führungswagen sind beidseitig der Führungsschiene jeweils zwei Reihen von Rollen vorgesehen, wodurch ein Abheben des Führungswagens von der Führungsschiene verhindert wird. Dabei sind so genannte Umlenkstücke im Innern des Führungswagens eingesetzt, die jeweils zur Umlenkung von zwei Rollenreihen dienen. Jeweils zwei Umlenkstücke sind gemeinsam in eine stirnseitige Endkappe des Führungswagens eingesetzt, von denen zwei vorgesehen sind. Die Umlenkstücke haben jeweils gekrümmte und bei der sogenannten O-Anordnung ineinander verschachtelte Umlenkbahnen, die jeweils einen Abschnitt einer Rollenbahn bilden.

Die Druckschrift DE 10 2010 049 943 A1 offenbart ein Schmiersystem für derartige Führungswagen. Dabei wird der Führungswagen mit Schmiermittel versorgt, das über interne Kanäle zu Mündungen in die Rollenbahnen geführt wird, an denen die Rollen vorbei laufen.

Um ein Leerlaufen der Schmiermittelleitungen zu verhindern, wenn der Führungswagen und damit die Schmiermittelförderung stillstehen, schlägt die Druckschrift DE 44 12 797 C2 eine Schmiermittelrückhaltevorrichtung vor, die als Rückschlagventil ausgebildet ist. Nachteilig daran ist, dass das Rückschlagventil an einer Stirnseite des Führungswagens und somit beabstandet zu den Rollenbahnen angeordnet ist. Dadurch verbleibt ein Abschnitt des Schiermittelleitung zwischen dem Rückschlagventil und der Rollenbahn, der leerlaufen kann, und der bei einem Wiederanfahren bzw. bei einem Neustart der Schmierung zunächst wieder gefüllt werden muss.

Die Druckschrift DE 10 2010 049 944 A1 offenbart in der Nähe der Mündungen der Schmiermittelleitungen in die Rollenbahnen elastische Ventilklappen. Diese sind in einer so genannten Umlenkplatte ausgebildet, die zwischen der jeweiligen Endkappe und einem mittleren Hauptkörper des Führungswagens vorgesehen ist. Die Ventilklappen werden elastisch gebogen und geben eine Weg für Schmiermittel frei, wenn dieses und einen gegen die Ventilklappe gefördert wird. Dabei verbleibt auch bei geschlossener Ventilklappe ein U-förmiger Schlitz, der im bei einem Einsatz von dünnflüssiges Schmiermittel stets etwas Schmiermittel durchlässt.

Die Druckschrift EP 2 094 984 B1 offenbart als Schmiermittelrückhaltung Ventile in der Nähe der Rollenbahn. Die Ventile sind im Innern der Endkappe angeordnet, die stirnseitig an dem Führungswagen angesetzt sind. Die Ventile bestehen aus elastisch biegbaren lappenartigen Elementen, die in Förderrichtung des Schmiermittels einen Schlitz freigeben, der in Gegenrichtung zugedrückt wird.

Aus der DE 103 32 922 A1 ist ein Führungswagen mit den Merkmalen des Oberbegriffs des Anspruchs 1 bekannt, dessen Ventilkörper einstückig mit der Umlenkplatte ausgebildet ist.

Nachteilig an den letztgenannten Führungswagen ist, dass ihre Schmiermittelrückhaltevorrichtungen bei dünnflüssigem Schmiermittel nicht ausreichend dicht sind. Weiterhin haben derartige Schmiermittelrückhaltevorrichtungen Fertigungstoleranzen, die ein ungleiches Öffnungsverhalten zur Folge haben. Insbesondere wenn die benötigten Schmiermittelmenge minimiert werden sollen, ist ein gleichmäßiges Verhalten aller Schmiermittelrückhaltevorrichtungen wichtig, damit eine gleichmäßige Versorgung aller Rollenbahnen mit Schmiermittel gewährleistet ist.

Dem entsprechend liegt der Erfindung die Aufgabe zu Grunde, einen Führungswagen für ein Linearrollenlager zu schaffen, dessen Schmiermittelrückhaltevorrichtungen verbessert sind.

Diese Aufgabe wird gelöst durch einen Führungswagen für ein Linearrollenlager mit den Merkmalen des Patentanspruchs 1.

Der beanspruchte Führungswagen kann zur Bildung eines Linearrollenlagers auf einer Führungsschiene verfahren werden. Der Führungswagen hat vier endlos umlaufenden Reihen von Rollen und einen mittleren Hauptkörper, an dessen Stirnseiten direkt anliegend oder beabstandet jeweils eine Endkappe angeordnet ist, in denen die Reihen von Rollen umgelenkt werden. Zwischen einem an einer Außenseite der Endkappe vorgesehenen Schmiermitteleingang bzw. Schmiermittelanschluss und den Reihen von Rollen bzw. ihren Rollenbahnen ist eine verzweigende Schmiermittelleitung vorgesehen. Erfindungsgemäß sind in der Schmiermittelleitung im Innern der Endkappe oder zwischen der Endkappe und dem Hauptkörper mehrere interne Rückschlagventile mit einem jeweiligen Schließkörper vorgesehen. Die Öffnungsrichtung der Rückschlagventile entspricht der Förderrichtung des Schmiermittels. Derartige Ventile mit Schließkörper weisen eine verbesserte Dichtigkeit auf da ihr Schließkörper an einen Ventilsitz des Rückschlagventils angepasst werden kann. Vorzugsweise sind die Rückschlagventile und ihre Schließkörper rotationssymmetrisch. Die Dichtung ist dann kreisförmig und daher passgenauer aus bei Schmiermittelrückhaltevorrichtungen gemäß dem Stand der Technik.

Bei einem insbesondere für kurze Hübe bzw. Verfahrwege geeigneten Führungswagen hat jede Rollenbahn beidseitig eine Mündung für Schmiermittel. Dann sind auch in einer zweiten im Wesentlichen gespiegelten Endkappe - wie die erste Endkappe - eine Schmiermittelleitung und die erfindungsgemäßen Rückschlagventile vorgesehen.

Weitere vorteilhafte Ausgestaltungen der Erfindung sind in den abhängigen Patentansprüchen beschrieben.

Bei einem erfindungsgemäßen Führungswagens sind in der Schmiermittelleitung eine erste Verzweigung und - in Förderrichtung betrachtet - dahinter zwei zweite Verzweigungen und zwei interne Rückschlagventile vorgesehen. Diese sind - in Förderrichtung betrachtet - hinter der ersten Verzweigung und vor den zweiten Verzweigungen angeordnet. Da somit ein Rückschlagventil in Wirkverbindung mit zwei Mündungen steht, ist der vorrichtungstechnische Aufwand minimiert.

Bei dem insbesondere für kurze Hübe bzw. Verfahrwege geeigneten erfindungsgemäßen Führungswagen sind die Rückschlagventile der zweiten Endkappe wie in der ersten Endkappe angeordnet.

Bei einem erfindungsgemäßen Führungswagen mit sich kreuzenden Rollenbahnen (O-Anordnung) liegt an jeder Stirnseite des Hauptkörpers eine Umlenkplatte an, und an der vom Hauptkörper abgewandten Außenseite jeder Umlenkplatte liegt ein Paar von Umlenkstücken an. Diese sind im Innern der ersten Endkappe aufgenommen und können miteinander verbunden sein. Dann wird es besonders bevorzugt, wenn die übergeordnete Verzweigung und die beiden untergeordneten Verzweigungen an der Umlenkplatte gebildet sind, wobei jedes Rückschlagventil durch eine Wirkverbindung zwischen der Umlenkplatte und einem jeweiligen Umlenkstück gebildet ist.

Bei dem insbesondere für kurze Hübe bzw. Verfahrwege geeigneten erfindungsgemäßen Führungswagen ist diese Anordnung auch an der zweiten gegenüber liegenden Seite des Führungswagens vorgesehen.

Bei einer ersten Alternative der Erfindung hat jedes interne Rückschlagventil eine Druckfeder, über die der Schließkörper gegen einen an der Umlenkplatte gebildeten Ventilsitz vorgespannt ist. Die Druckfeder stützt sich am jeweiligen Umlenkstück ab.

Dabei wird es bevorzugt, wenn der Schließkörper becherartig geformt ist und mit einer gewölbten Außenseite am jeweiligen Ventilsitz anliegt. Die Druckfeder taucht in eine - vorzugsweise konzentrische - Ausnehmung des Schließkörpers ein. Damit ist keine Führung des Schließkörpers und der Druckfeder nötig.

Bei einer zweiten vorrichtungstechnisch einfachen Alternative der Erfindung hat der Schließkörper eine kreiszylindrische oder kegelige Form und ist elastisch. Weiterhin ist der Schließkörper zwischen Umlenkplatte und Umlenkstück eingespannt.

Wenn dabei der Schließkörper aus einem Schaumstoff oder einem Elastomer mit niedriger Shorehärte besteht und kreiszylindrisch ist, können aus einem ebenen Halbzeug viele Schließkörper über Wasserstrahlschneiden gefertigt werden.

Die Oberflächen der Schließkörper können dabei zusätzlich durch einen zusätzlichen Stoff beschichtetet oder kaschiert sein um die Dichtwirkung zu verbessern.

Wenn der Schaumstoff geschlossene Zellen hat, wird ein Vollsaugen des Schließkörpers mit Schmiermittel vermieden.

Bei dem insbesondere für kurze Hübe bzw. Verfahrwege geeigneten erfindungsgemäßen Führungswagen sind auch die Rückschlagventile der zweiten Endkappe gemäß der ersten oder zweiten oben beschriebenen Weiterbildung ausgestaltet.

In Förderrichtung betrachtet vor dem ersten Schmiermitteleingang kann ein erster Kolbenverteiler oder ein erstes Dosierventil vorgesehen sein. Damit wird in regelmäßigen Zeitabständen eine vorbestimmte Menge Schmiermittel von einer zentralen Schmiermittelpumpe zum Führungswagen durchgelassen.

Bei dem insbesondere für kurze Hübe bzw. Verfahrwege geeigneten erfindungsgemäßen Führungswagen ist auch vor dem zweiten Schmiermitteleingang ein Kolbenverteiler bzw. Dosierventil angeordnet.

Mehrere Kolbenverteiler oder Dosierventile können in einer konstruktiven Einheit oder in einem gemeinsamen Gehäuse gruppiert sein.

Da derartige Kolbenverteiler einen Rückzug des Schmiermittels erzeugen, wird ein externes Rückschlagventil bevorzugt, das verhindert, dass die Schmiermitteleitung gegen die Förderrichtung abschnittsweise geleert (leergezogen) wird. Das externe Rückschlagventil wird zwischen dem Kolbenverteiler und dem Schmiermitteleingang ein angeordnet. Seine Öffnungsrichtung entspricht der Förderrichtung.

Bei dem insbesondere für kurze Hübe bzw. Verfahrwege geeigneten erfindungsgemäßen Führungswagen ist auch vor dem zweiten Schmiermitteleingang ein zweites externes Rückschlagventil angeordnet.

Im Folgenden werden anhand der Figuren verschiede Ausführungsbeispiele der Erfindung detailliert beschrieben. Es zeigen
Figur 1 ein erstes Ausführungsbeispiel eines erfindungsgemäßen Führungswagens mit einer Führungsschiene in einer perspektivischen Darstellung;
Figur 2 das erste Ausführungsbeispiel des Führungswagens mit Führungsschiene in einer geschnittenen Ansicht;
Figur 3 einen Schaltplan der Schmierstoffversorgung des ersten Ausführungsbeispiels;
Figur 4 eine Explosionszeichnung eines Führungswagens gemäß dem Stand der Technik;
Figur 5a und 5b eine Umlenkplatte des ersten Ausführungsbeispiels des erfindungsgemäßen Führungswagens;
Figur 6 eine Umlenkplatte und ein Umlenkstück mit einem internen Rückschlagventil des ersten Ausführungsbeispiels in einer Explosionszeichnung;
Figur 7 wesentliche Komponenten eines zweiten Ausführungsbeispiels des internen Rückschlagventils; und
Figur 8 einen Schließkörper eines dritten Ausführungsbeispiels des internen Rückschlagventils.

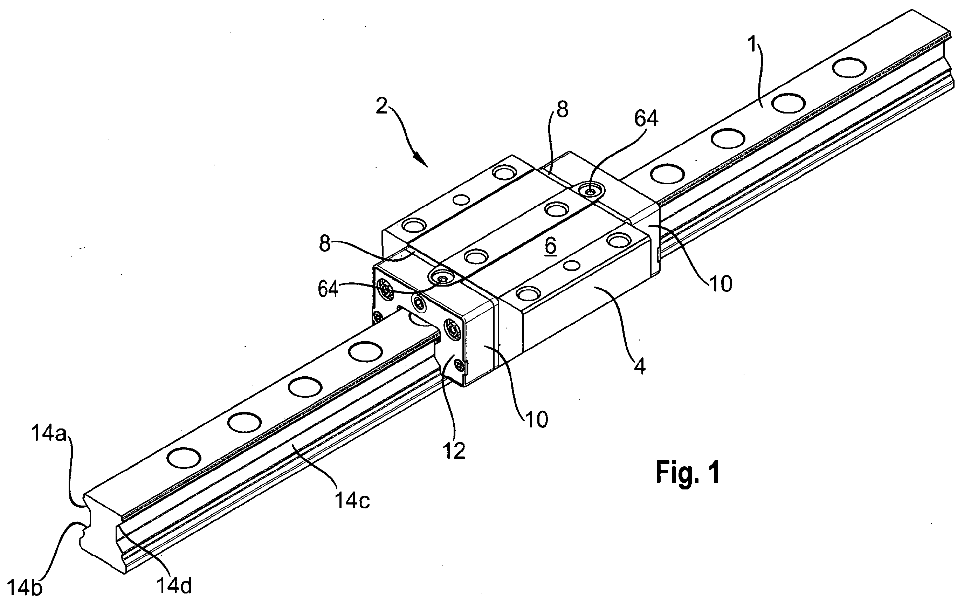

Figur 1 zeigt ein Linearwälzlager bzw. Linearrollenlager, das aus einer Führungsschiene 1 und einem erfindungsgemäßen Führungswagen 2 besteht. Dieser hat einen Hauptkörper 4 mit einer von der Führungsschiene 1 abgewandten Oberfläche 6, an der Gewindelöcher zur Befestigung einer Last vorgesehen sind. Stirnseitig am Hauptkörper 4 in Verfahrrichtung des Führungswagens 2 vorne und hinten sind zwei Umlenkplatten 8 vorgesehen, die am Hauptkörper 4 anliegen. Ebenfalls stirnseitig am Führungswagen 2 sind zwei Endkappen 10 vorgesehen, die an den Umlenkplatten 8 anliegen. An den äußersten Stirnflächen des Führungswagens 2 sind zwei Abdeckungen 12 angeordnet, die in die jeweilige Endkappe 10 eingesetzt sind, und von denen in Figur 1 nur eine Abdeckung 12 sichtbar ist. An jeder Endkappe 10 befinden sich bis zu vier mögliche Schmieranschlüsse 64, zwei seitlich, einer stirnseitig und einer oben.

Die Führungsschiene 1 hat - mit Bezug zur Verfahrrichtung des Führungswagens 2 - beidseitig jeweils zwei Laufbahnen 14a - 14d, wobei jeweils zwei gleichseitig angeordneten Laufbahnen 14a, 14b bzw. 14c, 14d jeweils um 90° zueinander angestellt sind. Dadurch kann sich der Führungswagen 2 in allen Richtungen, die quer zur Verfahrrichtung angeordnet sind, abstützen.

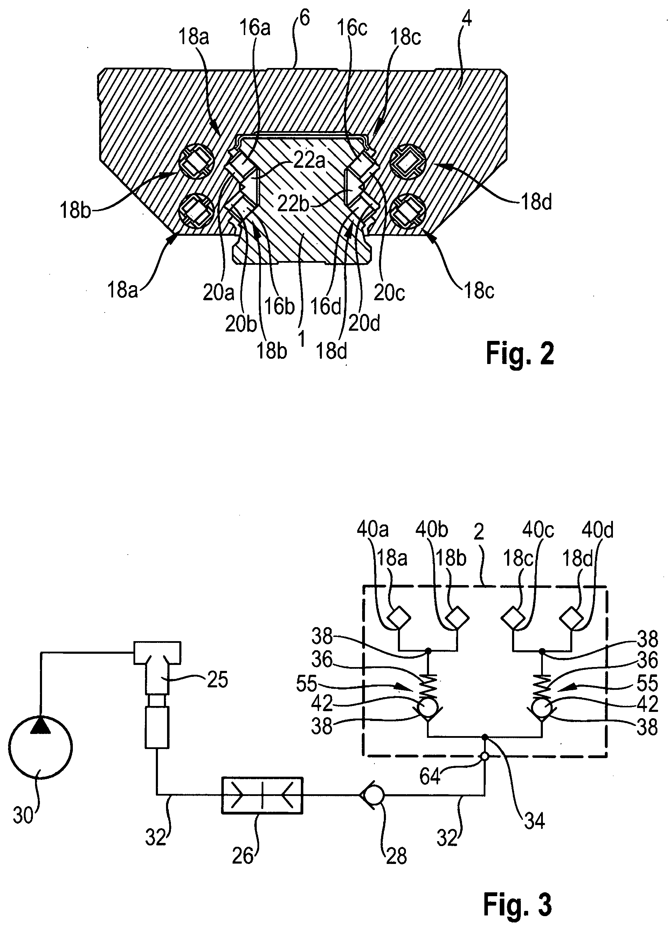

Figur 2 zeigt eine Stirnseite der Führungsschiene 1 und den Hauptkörper 4 des erfindungsgemäßen Führungswagens 2 in einem Querschnitt. Dabei ist die Verfahrrichtung des Führungswagens 2 senkrecht zur Zeichenebene angeordnet. Der Hauptkörper 4 umgreift bogenförmig die Führungsschiene 1.

Im bzw. am Hauptkörper 4 sind vier umlaufende bzw. endlose Reihen von rollenförmigen Wälzkörpern bzw. Rollen 16a - 16d vorgesehen. Weiterhin sind vier zugeordnete Rollenbahnen 18a - 18d dargestellt. Nachdem sich die Rollen 16a - 16d entlang zumindest der gesamten Länge des Hauptkörpers 4 abgewälzt haben, werden sie in einer der Endkappen 10 umgelenkt und laufen dann über einen Rücklaufbereich der Rollenbahn 18a - 18d zurück. Bei der abwälzenden Bewegung bewegen sich die Rollen 16a - 16d entlang einer jeweiligen Rollenbahneinlage 20a 20d des Hauptkörpers 4, die sich entlang der Verfahrrichtung erstrecken, und die aus Verschleißgründen gehärtet sind.

Ebenfalls in Verfahrrichtung entlang den an der Führungsschiene 1 anliegenden Reihen von Rollen 16a - 16d erstreckt sich ein jeweiliger Rollenführungssteg 22a, 22b.

Figur 3 zeigt einen Schaltplan der Schmierstoffversorgung des erfindungsgemäßen Führungswagens 2. Die eingerahmten Komponenten sind im Innern des Führungswagens 2 angeordnet, während ein Kolbenverteiler 25, eine Schnellkupplung 26 und ein externes Rückschlagventil 28 in einer (nicht näher gezeigten) Schleppvorrichtung des Führungswagens 2 aufgenommen sind. Dem gegenüber ortsfest ist eine Schmierpumpe 30 vorgesehen, die Schmiermittel über eine Schmierleitung 32 zu einer oder zu beiden Endkappen 10 des Führungswagens 2 fördert. In der Schmierleitung 32 sind der Kolbenverteiler, die Schnellkupplung 26 und das externe Rückschlagventil 28 angeordnet.

Bezüglich des Kolbenverteilers 25 wird auf die Druckschrift "Kolbenverteiler, Dosiereinheiten für Einleitungs-Verbrauchsschmieranlagen (Öl)" 1-5001-DE von 2009 der SKF Gruppe Bezug genommen und verwiesen. Derartige Kolbenverteiler 25 lassen zeitlich getaktet stets eine gewisse Schmiermittelmenge durch. Dazu ist im Innern des Kolbenverteilers 25 ein (nicht gezeigter) Kolben angeordnet, der bei seiner wiederkehrenden Rückbewegung systembedingt stets etwas Schmiermittel aus der Schmiermittelleitung 32 gegen die Förderrichtung des Schmiermittels ansaugt. Um zu verhindern, dass dadurch die Schmiermittelversorgung im Innern des Führungswagens 2 abschnittsweise entleert wird, ist das externe Rückschlagventil 28 vorgesehen.

Im Innern des Führungswagens 2 ist erfindungsgemäß entweder an dessen einen oder an beiden Stirnseiten des Hauptkörpers 4 die in Figur 3 eingerahmte Anordnung innerhalb der jeweiligen Endkappe 10 vorgesehen. Die Schmierleitung 32 mündet über den Schmieranschluss 64 in einer übergeordneten Verzweigung 34. Stromab der Verzweigung 34 sind zwei durch eine jeweilige Druckfeder 36 vorgespannte interne Rückschlagventile 55 vorgesehen. Die beiden Druckfedern 36 der beiden Rückschlagventile 55 spannen jeweils eine Kugel 42 gegen einen Ventilsitz 39.

Stromab jedes internen Rückschlagventils 55 ist eine untergeordnete Verzweigung 38 vorgesehen. Stromab jeder untergeordneten Verzweigung 38 sind insgesamt vier Mündungen 40a - 40d in die vier Rollenbahnen 18a - 18d vorgesehen.

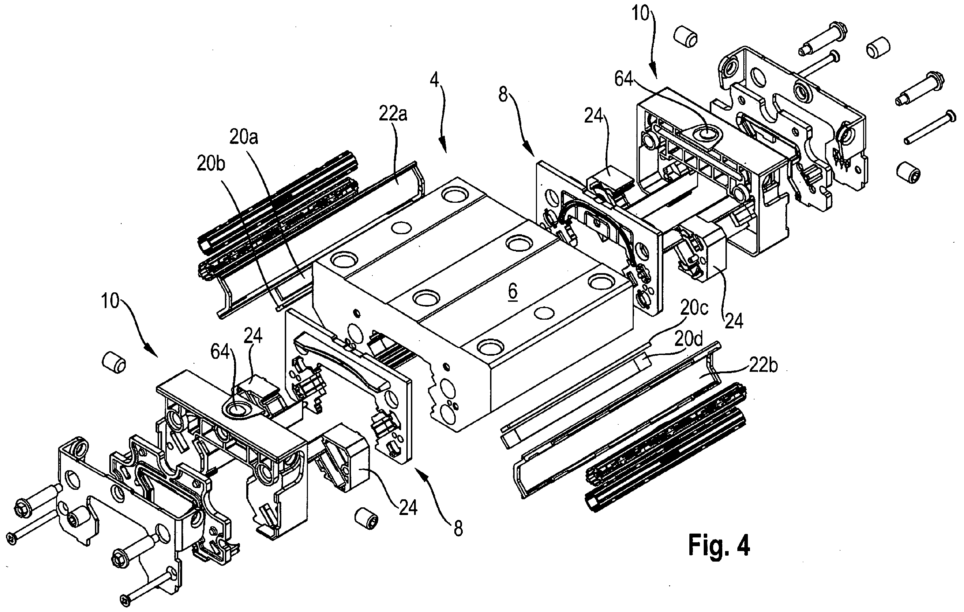

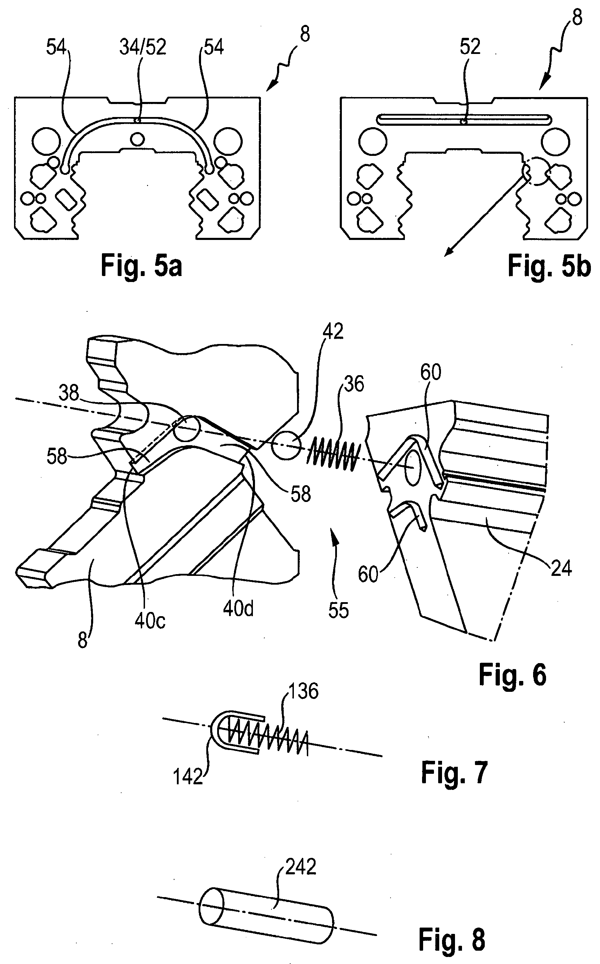

Figur 4 zeigt eine Explosionszeichnung des Führungswagens 2 gemäß dem Stand der Technik, in den die Verzweigungen 34, 38 gemäß Figur 3 und zwei Rückschlagventile 55 gemäß Figur 6 oder zwei Rückschlagventile gemäß Figur 7 oder zwei Rückschlagventile gemäß Figur 8 eingebaut werden. In jede Endkappe 10 sind an ihrer dem Hauptkörper 4 zugewandten Seite ein Paar von Umlenkstücken 24 eingesetzt, die an der zugeordneten Umlenkplatte 8 anliegen. Jedes Umlenkstück 24 bildet zusammen mit den Umlenkplatten 8 zwei gekreuzte und ineinander verschachtelte Umlenkbahnen der Rollenbahnen 18a - 18d. Weiterhin wird bzgl. des Grundaufbaus des Führungswagens 2 auf die Druckschrift DE 10 2010 049 944 A1 Bezug genommen und verwiesen.

Figuren 5a und 5b zeigen eine der beiden Umlenkplatten 8 des Führungswagens 2 (vgl. Figur 4) in verschiedenen Ansichten. Wie mit Bezug zur Figur 1 erläutert wurde, sind die beiden Umlenkplatten 8 zwischen der zugeordneten Endkappe 10 und dem Hauptkörper 4 eingespannt. Figur 5b zeigt die äußere Seite der Umlenkplatte 8, die an der jeweiligen Endkappe 10 und damit an den beiden zugeordneten Umlenkstücken 24 anliegt (vgl. Figur 4). Über eine mittlere Durchgangsausnehmung 52 der Umlenkplatte 8 wird das Schmiermittel zugeführt.

Figur 5a zeigt die innere Seite der Umlenkplatte 8, die an der Stirnseite an dem Hauptkörper 4 anliegt (vgl. Figur 4). Die Durchgangsausnehmung 52 der Umlenkplatte 8 bildet die übergeordnete Verzweigung 34 (vgl. Figur 3). Von dort wird das Schmiermittel über zwei bogenförmig verzweigende Schmiermittelnuten 54 zu den beiden Seiten der Umlenkplatte 8 und damit des Führungswagens 2 geleitet. Die Schmiermittelnuten 54 werden durch die Stirnseite des Hauptkörpers 4 abgedeckt, wodurch Schmiermittelkanäle gebildet sind. Die beiden Schmiermittelnuten 54 bzw. Schmiermittelkanäle münden jeweils in eine Durchgangsausnehmung 38 der Umlenkplatte 8.

Figur 6 zeigt einen Ausschnitt der äußeren Seite der Umlenkplatte 8 im Bereich einer der beiden Durchgangsausnehmungen 38, die gleichzeitig einen Ventilsitz 38 des jeweiligen internen Rückschlagventils 55 bilden. Weiterhin zeigt Figur 6 in einer Explosionszeichnung das interne Rückschlagventil 55, das von dem Ventilsitz 38, der Kugel 42 und der Druckfeder 36 gebildet ist. Die Druckfeder 36 stützt sich an dem zugeordneten Umlenkstück 24 ab, von dem ein Ausschnitt gezeigt ist.

In Förderrichtung hinter dem Rückschlagventil 55 verzweigt der Schmiermittelkanal in zwei Zweignuten 58. Jede Zweignut 58 mündet an der jeweiligen Mündung 40c, 40d in eine Rollenbahn 18a - 18d. Das Umlenkstück 24 ist gegen die Umlenkplatte 8 gespannt und schließt so die Zweignuten 58, wodurch Zweigkanäle gebildet sind. Dabei hat das Umlenkstück 24 entsprechende Dichtvorsprünge 60.

Figur 7 zeigt einen Schließkörper 142 und eine Druckfeder 136 eines zweiten Ausführungsbeispiels des erfindungsgemäßen internen Rückschlagventils. Der Schließkörper 142 ist becherartig und hat einen etwa halbkugelförmigen Abschnitt, der im geschlossenen Zustand des Rückschlagventils an dem Ventilsitz 38 anliegt (vgl. Figur 6). Die Druckfeder 136 taucht abschnittsweise in eine Ausnehmung des Schließkörpers 142 ein. Der Schließkörper 142 und die Druckfeder 136 werden beim zweiten Ausführungsbeispiel des erfindungsgemäßen internen Rückschlagventils zwischen die Umlenkplatte 8 und das Umlenkstück 24 auf die mit Bezug zur Figur 6 dargestellten Weise eingespannt.

Figur 8 zeigt einen Schließkörper 242 eines dritten Ausführungsbeispiels des erfindungsgemäßen internen Rückschlagventils. Der Schließkörper 242 ist kreiszylindrisch geformt und besteht aus Schaumstoff oder Elastomer mit niedriger Shorehärte. Er wurde durch Wasserstrahlschneiden aus einem Halbzeug herausgetrennt. Der Schließkörper 242 ist elastisch, so dass eine Druckfeder gemäß dem ersten und dem zweiten Ausführungsbeispiel entfallen kann. Der Schließkörper 242 wird zwischen die Umlenkplatte 8 und das Umlenkstück 24 gemäß Figur 6 eingespannt. Die Oberflächen des Schließkörpers 242 sind geschlossenzellig oder mit einem zusätzlichen Stoff beschichtet, so dass er sich nicht mit Schmiermittel vollsaugen kann und Verbesserung der Dichtwirkung erzielt wird.

Bei Schließkörpern 242 aus Schaumstoff oder Elastomeren presst die kreisförmige Zylinderdeckfläche auf eine kleinere Bohrung ab. Das hat den Vorteil, dass Ungenauigkeiten durch Baugruppenmontage zwischen einer Aufnahmebohrung für den Schließkörpern 242 und Durchflussöffnung ausgeglichen werden können.

Offenbart ist ein Führungswagen, der zur Bildung eines Linearrollenlagers auf einer Führungsschiene verfahren werden kann. Der Führungswagen hat vier endlos umlaufenden Reihen von Rollen, die in jeweiligen Rollenbahnen geführt sind. Der Führungswagen hat einen mittleren Hauptkörper, an dessen beiden in Verfahrrichtung zueinander beabstandeten Stirnseiten direkt anliegend oder beabstandet jeweils eine Endkappe angeordnet ist. In den Endkappen werden die Reihen von Rollen umgelenkt. Zwischen einem an einer Außenseite zumindest einer Endkappe vorgesehenen Schmiermitteleingang und den vier Reihen von Rollen bzw. den vier Rollenbahnen ist eine verzweigende Schmiermittelleitung vorgesehen. In der Schmiermittelleitung im Innern der Endkappe oder zwischen der Endkappe und dem Hauptkörper sind zwei oder vier interne Rückschlagventile mit einem jeweiligen Schließkörper vorgesehen, deren Öffnungsrichtung der Förderrichtung entspricht.

### Bezugszeichenliste

- 1: Führungsschiene
- 2: Führungswagen
- 4: Hauptkörper
- 6: Oberfläche
- 8: Umlenkplatte
- 10: Endkappe
- 12: Abdeckung
- 14a, 14b, 14c, 14d: Laufbahn
- 16a, 16b, 16c, 16d: Rolle
- 18a, 18b, 18c, 18d: Rollenbahn
- 20a, 20b, 20c, 20d: Rollenbahneinlage
- 22a, 22b: Rollenführungssteg
- 24: Umlenkstück
- 25: Kolbenverteiler
- 26: Schnellkupplung
- 28: externes Rückschlagventil
- 30: Schmierpumpe
- 32: Schmierleitung
- 34: übergeordnete Verzweigung
- 36; 136: Druckfede
- 38: untergeordnete Verzweigung / Ventilsitz/ Durchgangsausnehmung
- 40a, 40b, 40c, 40d: Mündung
- 42: Kugel
- 52: Durchgangsausnehmung
- 54: Schmiermittelnut
- 55: internes Rückschlagventil
- 58: Zweignut
- 60: Dichtvorsprung
- 64: Schmieranschluss
- 142: becherartiger Schließkörper
- 242: Schließkörper aus Schaumstoff

## Patentansprüche

1. Führungswagen, der zur Bildung eines Linearrollenlagers auf einer Führungsschiene (1) verfahrbar ist, mit vier endlos umlaufenden Reihen von Rollen (16a - 16d) und mit einem mittleren Hauptkörper (4), an dessen Stirnseiten Endkappen (10) angeordnet sind, in denen die Reihen von Rollen (16a - 16d) umgelenkt sind, wobei zwischen einem an einer Außenseite einer Endkappe (10) vorgesehenen Schmiermitteleingang (64) und den Reihen von Rollen (16a - 16d) eine verzweigende Schmiermittelleitung vorgesehen ist, wobei in der Schmiermittelleitung im Innern der Endkappe (10) oder zwischen der Endkappe (10) und dem Hauptkörper (4) mehrere interne Rückschlagventile (55) mit einem jeweiligen Schließkörper (42; 142; 242) angeordnet sind,
wobei in der Schmiermittelleitung eine übergeordnete Verzweigung (34) und in Förderrichtung dahinter zwei untergeordneten Verzweigungen (38) und zwei interne Rückschlagventile (55) vorgesehen sind, die in Förderrichtung hinter der übergeordneten Verzweigung (34) und in Förderrichtung vor den untergeordneten Verzweigungen (38) angeordnet sind,
wobei an jeder Stirnseite des Hauptkörpers (4) eine Umlenkplatte (8) anliegt, an der die Verzweigungen (34, 38) gebildet sind, und wobei an der vom Hauptkörper (4) abgewandten Außenseite jeder Umlenkplatte (8) ein Paar von Umlenkstücken (24) anliegt, die im Innern der jeweiligen Endkappe (10) aufgenommen sind,
wobei die beiden internen Rückschlagventile (55) zwischen der Umlenkplatte (8) und einem jeweiligen Umlenkstück (24) gebildet sind,
**dadurch gekennzeichnet, dass** gemäß einer ersten Alternative jedes interne Rückschlagventil (55) eine Druckfeder (36; 136) hat, über die der Schließkörper (42; 142; 242) gegen einen an der Umlenkplatte (8) gebildeten Ventilsitz (38) vorgespannt ist, und wobei sich die beiden Druckfedern (36; 136) am jeweiligen Umlenkstück (24) abstützen,
wobei gemäß einer zweiten Alternative mit jedes interne Rückschlagventil (55) einen Schließkörper (242) kreiszylindrischer oder kegeliger Form hat, elastisch ist und zwischen der Umlenkplatte (8) und dem jeweiligen Umlenkstück (24) eingespannt ist.

2. Führungswagen nach Anspruch 1, wobei der Schließkörper (142) becherartig geformt ist und mit einer Außenseite am jeweiligen Ventilsitz (38) anliegt, und wobei die Druckfeder (136) in eine Ausnehmung des Schließkörpers (142) eintaucht.

3. Führungswagen nach Anspruch 1, wobei der Schließkörper (242) aus einem Schaumstoff oder Elastomer gefertigt ist.

4. Führungswagen nach Anspruch 3, wobei die Oberflächen des Schließkörpers geschlossene Zellen sind oder zusätzlichen mit einem Stoff beschichtet sind.

5. Führungswagen nach einem der vorhergehenden Ansprüche, wobei in Förderrichtung vor dem Schmiermitteleingang (64) ein Kolbenverteiler (25) oder ein Dosierventil vorgesehen ist.

6. Führungswagen nach Anspruch 5, wobei zwischen dem Kolbenverteiler (25) oder dem Dosierventil und dem Schmiermitteleingang (64) ein externes Rückschlagventil (28) angeordnet ist.

## Claims

1. Guide carriage which is movable on a guide rail (1) in order to form a linear roller bearing, with four endlessly revolving rows of rollers (16a-16d) and with a central main body (4), on the end sides of which are arranged end caps (10), in which the rows of rollers (16a-16d) are deflected, wherein a branching lubricant line is provided between a lubricant input (64), which is provided on an outer side of an end cap (10), and the rows of rollers (16a-16d), wherein a plurality of internal nonreturn valves (55) having a respective closing body (42; 142; 242) are arranged in the lubricant line in the interior of the end cap (10) or between the end cap (10) and the main body (4),
wherein the lubricant line is provided with a primary branch (34) and downstream thereof, in the conveying direction, with two secondary branches (38) and two internal nonreturn valves (55) which are arranged downstream of the primary branch (34) in the conveying direction and upstream of the secondary branches (38) in the conveying direction,
wherein a deflecting plate (8) on which the branches (34, 38) are formed bears against each end side of the main body (4), and wherein a pair of deflecting pieces (24) which are accommodated in the interior of the respective end cap (10) bears against the outer side of each deflecting plate (8), which outer side faces away from the main body (4),
wherein the two internal nonreturn valves (55) are formed between the deflecting plate (8) and a respective deflecting piece (24), **characterized in that**, according to a first alternative, each internal nonreturn valve (55) has a compression spring (36; 136) via which the closing body (42; 142; 242) is prestressed against a valve seat (38) formed on the deflecting plate (8), and wherein the two compression springs (36; 136) are supported on the respective deflecting piece (24),
wherein, according to a second alternative, each internal nonreturn valve (55) has a closing body (242) which has a circular-cylindrical or conical shape and is elastic and is clamped between the deflecting plate (8) and the respective deflecting piece (24).

2. Guide carriage according to Claim 1, wherein the closing body (142) is shaped in a cup-like manner and bears with an outer side against the respective valve seat (38), and wherein the compression spring (136) enters a recess of the closing body (142).

3. Guide carriage according to Claim 1, wherein the closing body (242) is manufactured from a foam or an elastomer.

4. Guide carriage according to Claim 3, wherein the surfaces of the closing body are closed cells or additionally coated with a substance.

5. Guide carriage according to one of the preceding claims, wherein a piston distributor (25) or a metering valve is provided upstream of the lubricant input (64) in the conveying direction.

6. Guide carriage according to Claim 5, wherein an external nonreturn valve (28) is arranged between the piston distributor (25) or the metering valve and the lubricant input (64).

## Revendications

1. Chariot de guidage, qui peut être déplacé pour former un palier à rouleaux linéaire sur un rail de guidage (1), comprenant quatre rangées de rouleaux (16a-16d) en circulation sans fin et comprenant un corps principal central (4) au niveau des côtés frontaux duquel sont disposés des capuchons d'extrémité (10), dans lesquels les rangées de rouleaux (16a-16d) sont renvoyées, une conduite de lubrifiant se ramifiant étant prévue entre une entrée de lubrifiant (64) prévue au niveau d'un côté extérieur d'un capuchon d'extrémité (10) et les rangées de rouleaux (16a-16d), plusieurs soupapes de non-retour internes (55) avec un corps de fermeture respectif (42 ; 142 ; 242) étant disposées dans la conduite de lubrifiant à l'intérieur du capuchon d'extrémité (10) ou entre le capuchon d'extrémité (10) et le corps principal (4),
une ramification primaire (34) étant prévue dans la conduite de lubrifiant et deux ramifications secondaires (38) ainsi que deux soupapes de non-retour internes (55) étant prévues dans la direction de transport derrière celle-ci, lesquelles sont disposées dans la direction de transport derrière la ramification primaire (34) et dans la direction de transport avant les ramifications secondaires (38),
une plaque de renvoi (8) s'appliquant au niveau de chaque côté frontal du corps principal (4), au niveau de laquelle sont formées les ramifications (34, 38), et une paire de pièces de renvoi (24) s'appliquant au niveau du côté extérieur de chaque plaque de renvoi (8) opposé au corps principal (4), lesquelles pièces de renvoi sont reçues à l'intérieur du capuchon d'extrémité respectif (10),
les deux soupapes de non-retour internes (55) étant formées entre la plaque de renvoi (8) et une pièce de renvoi respective (24),
**caractérisé en ce que** selon une première variante, chaque soupape de non-retour interne (55) présente un ressort de compression (36 ; 136) par le biais duquel le corps de fermeture (42 ; 142 ; 242) est sollicité contre un siège de soupape (38) formé au niveau de la plaque de renvoi (8), et les deux ressorts de compression (36 ; 136) s'appuyant contre la pièce de renvoi respective (24), et selon une deuxième variante, chaque soupape de non-retour interne (55) présente un corps de fermeture (242) avec une forme cylindrique circulaire ou conique, est élastique et est serrée entre la plaque de renvoi (8) et la pièce de renvoi respective (24).

2. Chariot de guidage selon la revendication 1, dans lequel le corps de fermeture (142) est formé en forme de coupe et s'applique avec un côté extérieur contre le siège de soupape respectif (38), et dans lequel le ressort de compression (136) plonge dans un évidement du corps de fermeture (142).

3. Chariot de guidage selon la revendication 1, dans lequel le corps de fermeture (242) est fabriqué à partir d'une mousse ou d'un élastomère.

4. Chariot de guidage selon la revendication 3, dans lequel les surfaces du corps de fermeture sont des cellules fermées ou sont revêtues en outre d'une substance.

5. Chariot de guidage selon l'une quelconque des revendications précédentes, dans lequel un distributeur à piston (25) ou une soupape de dosage est prévu(e) dans la direction de transport avant l'entrée de lubrifiant (64).

6. Chariot de guidage selon la revendication 5, dans lequel entre le distributeur à piston (25) ou la soupape de dosage et l'entrée de lubrifiant (64) est disposée une soupape de non-retour interne (28).
